# EUROPEAN PATENT SPECIFICATION

(11) **EP 1 621 581 B1**
(45) Date of publication and mention of the grant of the patent: **28.02.2007**
(21) Application number: 05254663.7
(22) Date of filing: 27.07.2005
(51) Int. Cl.: C08L 67/03, C08K 7/04

(54) **Liquid crystaline polyester resin composition**
Flüssigkristalline Polyesterzusammensetzung
Composition de polyesters cristallins liquides

(30) Priority: 30.07.2004 JP 2004223567
(43) Date of publication of application: 01.02.2006
(73) Proprietor: Polyplastics Co., Ltd., Tokyo 108-8280 (JP)
(72) Inventor: Watanabe, Kazufumi, c/o Polyplastics Co Ltd, Fuji-shi, Shizuoka (JP); Fukatsu, Hiroki, c/o Polyplastics Co Ltd, Fuji-shi, Shizuoka (JP); Asashina, Yasuyuki, c/o Polyplastics Co Ltd, Fuji-shi, Shizuoka (JP)
(74) Representative: Peel, James Peter

(56) References cited:
- EP-A- 0 049 617
- EP-A- 1 195 408
- EP-A- 1 319 678

## Description

### Technical Field

The present invention relates to a liquid crystalline polyester composition best suitable, in particular, for manufacturing connectors.

### Prior Arts

Among thermoplastic resins, liquid crystalline polymers are known as the materials having excellent dimensional accuracy, damping performance, and flowability, and generating very few flashes during molding. Owing to these advantages, liquid crystalline polymers have been adopted as the materials of various electronics parts.

In particular, a large quantity of liquid crystalline polymer compositions is used to manufacture connectors responding to the current requirements of increased performance of electronics devices in terms of increased heat resistance (increase in the productivity supported by the advanced mounting technology), increased density (increase in the number of pins), and decreased size of connectors.

The liquid crystalline polymer compositions having an improved flowability to some extent, however, cannot satisfy the requirements of thin and narrow-pitch connectors requested in recent years.

Typical thin and narrow-pitch connectors include a board-to-board (B to B) connector which is used to join printed circuit boards and an FPC connector which is used to join flexible printed circuit board (FPC) with flexible flat cable (FFC) . Those B to B connector and FPC connector are requested to narrow the area for mounting connector accompanied with the current trend of size reduction of electronics equipment which adopts printed circuit boards, and also requested to have a lower height than usual to decrease the distance between the printed circuit boards. For example, connectors with narrow-pitch of terminal pins to 1 mm or less have been introduced. In addition, low height connectors having 3 mm or smaller thickness in connector-insertion state, (what is called the "stacking height"), are provided.

Furthermore, the requests of narrowing the terminal pitches and of a lower height than usual or stacking height have been increased recently, and the market wants to have 0.5 mm or smaller terminal pitch and less than 1.0 mm of stacking height. To answer these requirements, the size of liquid crystalline polymer molded article which holds terminals has to be decreased. The decreased size significantly decreases the strength of connector, which may fail to maintain the practical strength. That is, reduction in the connector thickness may further likely induce twist or crack of connector owing to the stress generated during handling or mounting.

As described above, the liquid crystalline polymer materials which are used for thin and narrow-pitch connectors represented by B to B connector and FPC connector are requested to have both high flowability and excellent dimensional stability. For example, filling a resin to a small thickness portion thinner than 0.1 mm needs to decrease the quantity of filling resin. In that case, however, the above-compositions lack the strength to raise a problem of deformation by reflow in mounting stage. Regarding the dimensional stability, for example, it is known that the addition of a specific mica to a liquid crystalline polyester and/or a liquid crystalline polyester amide provides a liquid crystalline polymer composition having excellent dimensional stability, as described in JP-A 4-202558. The liquid crystalline polymer composition described in JP-A 4-202558, however, are not satisfactory giving insufficient heat resistance and inducing deformation by reflow in mounting stage.

### Disclosure of the Invention

As described above, various studies were given to the liquid crystalline polymer materials used in thin and narrow-pitch connectors. However, there is no material that satisfies all the characteristics of excellent moldability, flatness, warp-deformation resistance, and heat resistance.

Focusing on the above problems, the inventors of the present invention conducted detail research and investigation to provide a liquid crystalline polymer material which can mold a connector having well-balanced performance, and found that a composition of liquid crystalline polyester prepared by combining 2-hydroxy-6-naphthoic acid unit with 4-hydroxybenzoic acid unit at a specific ratio range, and further by adding mica and a fibrous filler at respective specific percentages gives good moldability, and excellent flatness, warp-deformation resistance, and heat resistance, thus perfected the present invention.

That is, the present invention provides a liquid crystalline polyester resin composition comprising (A) 100 parts by weight of a liquid crystalline polyester resin comprising structural units represented by the respective formulae (I), (II), (III), and (IV), respectively, as essential structural units, in amounts of 40 to 75% by mole of the structural unit (I), 8.5 to 30% by mole of the structural unit (II), 8.5 to 30% by mole of the structural unit (III) and 0.1 to 8% by mole of the structural unit (IV) to all the structural units, (B) 5 to 80 parts by weight of mica and (C) 5 to 35 parts by weight of a fibrous filler:

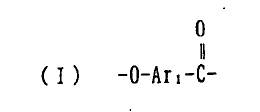

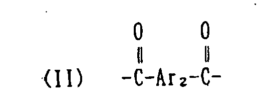

(III) -0-Ar₃-0-

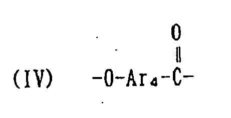

where Ar₁ is 2,6-naphthalene, Ar₂ is at least one group selected from the group consisting of 1,2-phenylene, 1,3-phenylene and 1, 4-phenylene, Ar₃ is at least one group selected from the group consisting of 1,3-phenylene, 1,4-pheynylene and a residue of a compound having two or more phenylene groups bonding with each other at the respective para-positions, and Ar₄ is 1,4-pheynylene.

The present invention provides a connector containing a molded article of the above-described liquid crystalline polyester resin composition, and further provides use of the above-described liquid crystalline polyester resin composition for connector parts.

### Detailed Description of the Invention

The present invention is described in detail in the following. The (A) liquid crystalline polyester according to the present invention is a melt-processing polymer which can form an optically anisotropic molten phase. Properties of the anisotropic molten phase can be determined by a common polarization test method utilizing crossed polarizers. Specifically,the determination of anisotropic molten phase can be done by observing a molten sample placed on a Leitz hot stage of a Leitz polarization microscope at x40 magnification in a nitrogen atmosphere. The liquid crystalline polymer applicable to the present invention shows an optical anisotropy under the inspection between crossed polarizers, allowing the polarization to normally transmit even in a melted and stationary state.

The liquid crystalline polyester according to the present invention has to have a specific structural unit, adding to the capability of forming above-described optically anisotropic molten phase.

The raw material chemical compounds necessary to form the liquid crystalline polyester according to the present invention are sequentially described in detail below. To prepare the above-described structural units (I) through (IV), various compounds having ordinary ester-forming capability are applied.

The structural unit (I) is derived from 2-hydroxy-6-naphtoic acid.

The structural unit (II) is a dicarboxylic acid unit. The Ar₂ is selected from the group consisting of 1, 2-phenylene, 1,3-phenylene, and 1,4-phenylene. From the point of heat resistance, however, Ar₂ is preferably derived from terephthalic acid.

The structural unit (III) is a diol unit. The raw material compound thereof adopts hydroquinone, dihydroxybiphenyl, and the like. From the point of heat resistance, however, dihydroxybiphenyl, particularly 4,4'-dihydroxybiphenyl is preferred.

The structural unit (IV) is derived from 4-hydroxybenzoic acid.

According to the present invention, the liquid crystalline polyester is required to contain above-described structural units (I) through (IV), with the respective ranges of: 40 to 75% by mole, (preferably 40 to 60%, and more preferably 45 to 60% by mole), of the structural unit (I), 8.5 to 30% by mole, (preferably 17.5 to 30% by mole), of the structural unit (II), 8.5 to 30% by mole, (preferably 17.5 to 30% by mole), of the structural unit (III), and 0.1 to 8% by mole, (preferably 1 to 6% by mole), of the structural unit (IV), to the total quantity of the structural units.

The amounts of (I), (II), (III) and (IV) are based on the total of (I), (II), (III) and (IV). The liquid crystalline polyester comprising only (I), (II), (III) and (IV) may be called wholly aromatic.

JP-A 56-10526 discloses a copolyester containing the structural units (I), (II), and (III) by the amounts of 10 to 90% by mole, 5 to 45% by mole, and 5 to 45% by mole, respectively. The copolyester has a problem of high solidification rate during cooling stage to likely solidify the polymer at the discharge opening of the polymerization reactor. To solve the problem by decreasing the solidification rate during cooling to allow the polymer to be discharged from the polymerization reactor, the present invention adds the structural unit (IV) by 0.1 to 8% by mole, while controlling the contents of structural units (I) through (III) to the above respective ranges.

JP-A 55-144024 discloses a copolyester containing the structural units (I), (II), (III), and (IV) by the amounts of 20 to 40% by mole, 5 to 30% by mole, 5 to 30% by mole, and 10 to 50% by mole, respectively. The copolyester, however, has problems of deteriorated heat resistance owing to insufficient amount of the structural unit (I) and excess structural unit (IV), and of likely solidifying the polymer at the discharge opening of the polymerization reactor owing to insufficient amount of the structural unit (I).

To this point, the present invention aims to control the crystallization state of the polymer to an optimum level, thus to decrease the solidification rate to an adequate level during cooling stage to allow the polymer to be smoothly discharged from the polymerization reactor, and to increase the heat resistance. Specifically the present invention keeps the percentage of the respective structural units (I), (II), (III), and (IV) to the above-given respective ranges, particularly keeps the ratio of the structural unit (I) to the structural unit (IV), (I)/(IV), to a range from 5 to 750, preferably from 6 to 150, thereby solving the above problems to successfully providing a wholly-aromatic polyester having excellent heat resistance, manufacturability, and moldability.

The wholly-aromatic polyester according to the present invention is prepared by polymerization using direct polymerization process or ester interchange process. The polymerization is conducted by melt polymerization process, solution polymerization process, slurry polymerization process, solid phase polymerization process, and the like.

According to the present invention, polymerization may be done using an acylation agent for polymerizing monomer and a monomer which is activated at terminals thereof as an acid chloride derivative. Applicable acylation agent includes an acid anhydride such as acetic anhydride.

The above polymerization can adopt various catalysts, typically dialkyltin oxide, diaryltin oxide, titanium dioxide, alkoxytitanium silicate, titanium alcoholate, alkali salt and alkali earth metal salt of carboxylic acid, and Lewis acid such as BF3. Preferable use amount of the catalyst is generally about from 0.001 to 1% by weight, more preferably about from 0.003 to 0.2% by weight, to the total weight of monomer.

On conducting solution polymerization or slurry polymerization, applicable solvent includes liquid paraffin, highly heat-resistant synthetic oil, and inert mineral oil.

The reaction conditions are: 200°C to 380°C of reaction temperature; and 0.1 to 760 Torr (13 to 101, 080 Pa) of ultimate pressure. Particularly for the melt reaction, the conditions are: 260°C to 380°C, preferably 300°C to 360°C, of reaction temperature; and 1 to 100 Torr (133 to 13,300 Pa), preferably 1 to 50 Torr (133 to 6,670 Pa) of ultimate pressure.

The reaction may begin by charging a reactor with the total amount of raw material monomers, an acylation agent and a catalyst (single stage reaction), or may be conducted by firstly acylating the hydroxyl groups of the raw material monomers (I), (III), and (IV) by an acylation agent, followed by letting the acylated monomers react with the carboxylic group of the monomer (II) (two stage reaction).

The melt polymerization may be carried out by letting the reaction system reach a given temperature and evacuatng the system down to a given reduced pressure. After the torque of an agitator has reached a given value, an inert gas is introduced to the system, the pressure of the system is raised from the reduced pressure through the normal pressure to a given pressurized state and then the polymer is taken out from the reaction system.

The polymer manufactured by the above polymerization process may further be subjected to the solid polymerization where the polymer is heated under normal pressure or reduced pressure, or in an inert gas atmosphere, thus increasing the molecular weight. Preferable conditions of the solid polymerization are: 230°C to 350°C, more preferably 260°C to 330°C, of reaction temperature; and 10 to 760 Torr (1, 330 to 101,080 Pa) of ultimate pressure.

The (B) mica, an important structural element of the present invention, is below described. Mica is a ground silicate mineral containing aluminum, potassium, magnesium, sodium, iron, and the like. Mica has various types such as muscovite, phlogopite, biotite, and artificial mica. Although any type of these micas can be applied as the mica for the present invention, muscovite is preferred. Phlogopite and biotite are soft compared with muscovite. Phlogopite and biotite contain large amount of Fe in their main ingredients compared with muscovite, thus their appearance become blackish. Artificial mica is prepared by substituting OH group in natural phlogopite with F, and the artificial mica is expensive and is not suitable for practical use.

The known methods for grinding mica during the preparation thereof are wet grinding method and dry grinding method. The wet grinding is done by rough crushing the mica ore in a dry crusher, and by adding water to thus crushed mica to form mica slurry, which is then ground by wet grinding method, followed by dewatering and drying. Dry grinding is low cost and commonly applied than wet grinding. Since, however, dry grinding is difficult to thinly and finely grind mica, the present invention preferably uses the mica manufactured by wet grinding method.

For conducting wet grinding, the material to be ground has to be dispersed in water. Accordingly, it is a common practice to add a coagulant/coagulating assistant to the slurry to increase the dispersion efficiency of the material being ground. Applicable coagulant/coagulating assistant includes polyaluminum chloride, aluminum sulfate, iron(II) sulfate, iron(III) sulfate, chlorinated copperas, polyiron sulfate, polyiron(III) chloride, iron-silica inorganic polymer coagulant, iron(III) chloride-silica inorganic polymer coagulant, slaked lime (Ca(OH)₂), caustic soda (NaOH), and soda ash (Na₂CO₃). Since, however, these coagulants/coagulating assistants have pH of either alkaline side or acidic side, once the mica which was treated by these coagulants/coagulating assistants is added to the liquid crystalline polyester, the mica induces decomposition of the polymer to generate large volume of gas or to decrease the molecular weight of the polymer, thereby adversely affecting the performance of thin connector which is a target of the present invention. Consequently, the mica applied to the present invention is preferably the one which adopts coagulant/coagulating assistant in the wet grinding process.

The mica applied to the present invention preferably has average particle sizes from 10 to 100 µm, more preferably from 20 to 80 µm, determined by the micro-track laser diffraction method. If the average particle size of mica is smaller than 10 µm, the effect to improve stiffness is insufficient. Even if the average particle size thereof is larger than 100 µm, the stiffness improvement is not satisfactory, and the weld-strength is insufficient. Furthermore, if the average particle size exceeds 100 µm, the satisfactory flowability to mold the connector which is a target of the present invention cannot be secured.

A preferable thickness of mica is in a range from 0.01 to 1 µm, more preferably from 0.03 to 0.3 µm, determined by the observation with electron microscope. Mica having smaller than 0.01 µm in thickness likely breaks during melt-processing stage, and does not further improve the stiffness. Mica having larger than 1 µm in thickness does not give sufficient effect of improving stiffness. The mica may be processed by surface treatment using silane coupling agent and the like, and further may be granulated using a binder. A typical example of the mica suitable for the present invention is a mica powder AB-25S manufactured by Yamaguchi Mica Co., Ltd., which is commercially available.

To obtain a connector with high dimensional accuracy in the present invention, larger added amount of mica is more preferable. Excess addition of mica, however, increases specific gravity, deteriorates extrudability and moldability, and particularly deteriorates flowability, thereby failing in attaining the desired narrow-pitch connector. If, inversely, the added amount of mica is excessively small, excellent dimensional stability which is a target of the present invention cannot be attained. Therefore, the added amount of (B) mica is specified to a range from 5 to 80 parts by weight, preferably from 15 to 50 parts by weight, to 100 parts by weight of the (A) liquid crystalline polyester.

The following is the description about the (C) fibrous filler which is a structural component of the present invention. By adding a fibrous filler to the liquid crystalline polyester, the strength of connector increases and the warp-deformation resistance increases. Accordingly, the (C) fibrous filler is an essential component of the present invention.

Examples of the applicable fibrous filler are glass fiber, asbestos fiber, silica fiber, silica-alumina fiber, alumina fiber, zirconia fiber, boron nitride fiber, silicon nitride fiber, boron fiber, potassium titanate fiber, silicate fiber such as wollastonite fiber, magnesium sulfate fiber, aluminum borate fiber, and inorganic fibrous material such as fibrous material of metal such as stainless steel, aluminum, titanium, copper, and brass. As of these, a specifically typical fibrous filler is glass fiber. High melting point organic fibrous materials such as polyamide, fluororesin, polyester resin, and acrylic resin are also applicable.

These fibrous fillers may be used separately or in combination of two or more of them. If needed, a binder or a surface treatment agent may be added on using these fibrous fillers.

According to the present invention, the weight average length of fibrous filler is preferably 300 µm or less. If the weight average length thereof exceeds 300 µm, the flowability deteriorates even with a reduced mixing rate, and no connector having excellent flatness is attained. In view of balance between flowability and mechanical properties, milled glass fiber having 150 µm or smaller weight average length is particularly preferred. The term "weight average length of fibrous filler" referred to herein designates the value in the molded article, which can be determined by a method described later. Although the fiber diameter of the fibrous filler is not specifically limited, generally the diameters from 5 to 15 µm are used.

According to the present invention, larger amount of fibrous filler gives higher strength and stiffness, and provides higher dimensional stability. Excess addition of fibrous filler, however, increases specific gravity and deteriorates extrudability and moldability, particularly deteriorates flowability, thus failing in attaining the desired narrow-pitch connector. Excessively small amount of fibrous filler also fails to attain excellent dimensional stability which is a target of the present invention. Consequently, the added amount of the (C) fibrous filler is in a range from 5 to 35 parts by weight, preferably from 10 to 30 parts by weight, to 100 parts by weight of the (A) liquid crystalline polyester.

Furthermore, the liquid crystalline polyester composition according to the present invention may contain other thermoplastic resin as an assistant within a range not to adversely affect the object of the present invention.

Examples of the assistant thermoplastic resin are: polyolefin such as polyethylene and polypropylene; aromatic polyester containing an aromatic dicarboxylic acid such as polyethylene terephthalate and polybutylene terephthalate, and a diol, and the like; polyacetal (homo- or co-polymer) ; polystyrene; polyvinyl chloride; polyamide; polycarbonate; ABS; polyphenylene oxide; polyphenylene sulfide; and fluororesin. These thermoplastic resins may be used in combination of two or more of them.

Regarding the liquid crystalline resin composition, a composition which contains additives such as nuclear agent, carbon black, pigment such as inorganic fired pigment, antioxidant, stabilizer, plasticizer, lubricator, mold-releasing agent, fire-retardant, thereby providing the desired respective characteristics are also within the scope of the liquid crystalline resin composition specified by the present invention.

For manufacturing the liquid crystalline polyester composition according to the present invention, the above-described components may be blended at the above-given mixing rates to knead them together. A common practice is to knead these components in an extruder, to extrude them into pellet shape, and then to feed them to an injection molding process and the like. However, the manufacturing method is not limited to that kind of kneading in extruder. The liquid crystalline polyester composition according to the present invention is processed by a known molding and processing apparatus such as injection molding machine and the like to provide molded article. As described before, the liquid crystalline polyester composition according to the present invention is suitable for electronics parts such as connector, and particularly suitable for a thin and narrow-pitch connector which has 1 mm or smaller pitch and 3 mm or smaller stacking height after being mounted to a board. In addition, owing to the improved moldability, the liquid crystalline polyester composition according to the present invention is effective to improve productivity in terms of mold protection, unmanned operation, and the like during molding of various industrial parts such as electric and electronics parts.

### Brief Description of the Drawings

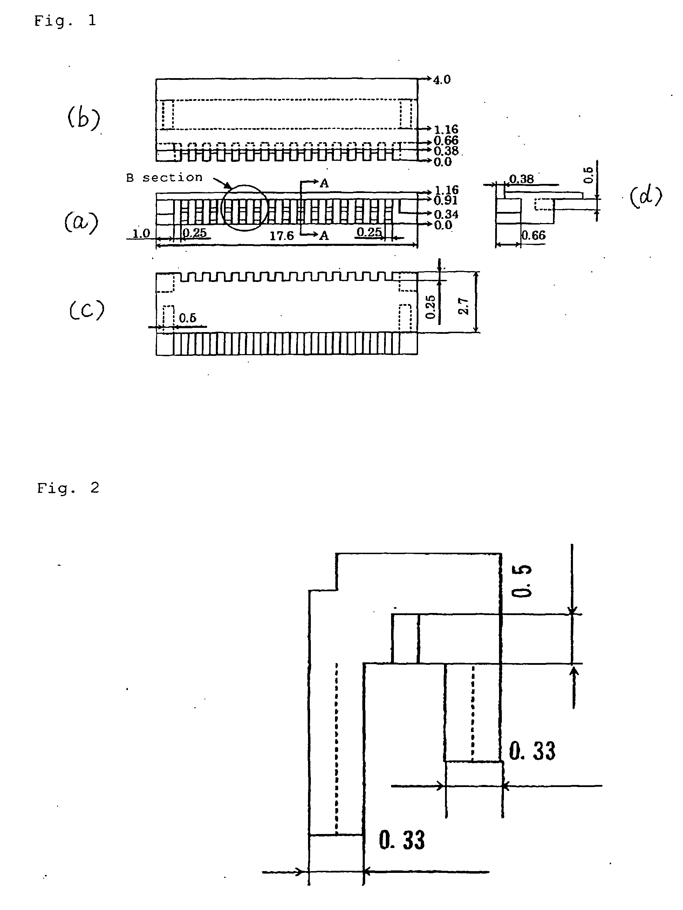

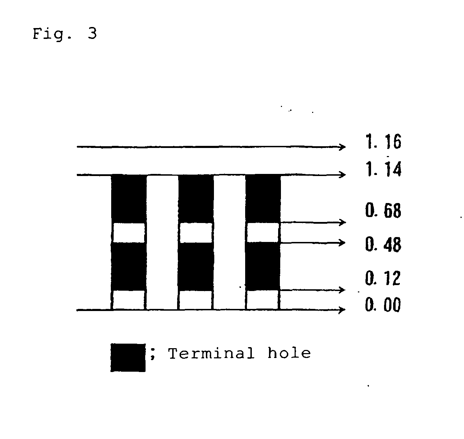

Figure 1 shows an FPC connector model used to determine the injecting pressure in Examples. Fig. 1(a) shows the front view, Fig. 1(b) shows the top view, Fig. 1(c) shows the bottom view, and Fig. 1(d) shows the side view. The unit of numerals in the drawing is millimeter. Figure 2 is A-A cross sectional view of Fig. 1(a). Figure 3 is a detail view of B section of Fig. 1(a).

### Examples

The present invention is described in more detail referring to the examples below. The present invention is, however, not limited by these examples. The physical properties given in the examples were determined by the respective methods given below.

### [Melting point]

The melting point was determined by DSC made by PerkinElmer, Inc.

### [Injecting pressure]

Molding was conducted using an FPC connector model (0.5 mm in pitch, 1.16 mm in height, 0.12 mm in minimum thickness), shown in Fig. 1, under the conditions given below. The minimum pressure to inject the melt material into a mold was determined. A lower injecting pressure suggests an improved flowability of the material.

### (Molding conditions)

- Molding machine: FANUC ROBOSHOT α-50C
- Mold temperature: 80°C
- Cylinder temperature: 370°C-370°C-360°C-350°C
   (Examples 1 through 6, Comparative Example 1)
   350°C-350°C-340°C-330°C (Comparative Example 2)
   330°C-330°C-320°C-310°C (Comparative Example 3)
   300°C-300°C-290°C-280°C (Comparative Example 4)
- Injection speed: 200 mm/sec
- Holding pressure: 49 MPa
- Pressure holding time: 1 sec
- Cooling time: 5 sec
- Screw rotational speed: 150 rpm
- Screw backpressure: 4 MPa

### [Determination of weight average length of glass fiber]

5 grams of resin composition pellets was heated to 600 °C for 2 hours to ash. The ash residue was fully dispersed in 5% polyethylene glycol aqueous solution. The mixture was transferred on a Petri dish using a dropping pipette. The glass fiber in the mixture was observed using a microscope. With an image analyzer (LUZEX FS, made by NIRECO Corporation), the weight average length of the glass fiber was determined. On image-analyzing, a subroutine was applied to separate the overlaid fibers to individual ones, thereby determining the length of each fiber. The determination was done excluding the glass fibers having 10µm or smaller length.

### [measurement of flexural property]

The flexural strength was determined in accordance with ISO178.

### [Blister test]

Molded articles each having 124 mm in length, 12 mm in width, and 0.8 mm in thickness were prepared as the blister test specimens. The molding conditions are given below. Each of thus prepared molded articles was immersed in silicone oil at various temperatures for 5 minutes, and then the surface of the specimen was observed. The maximum temperature not to induce surface swelling was defined as the Blister Free Temperature (BFT). Higher BFT suggests higher heat resistance.

### (Molding conditions)

- Molding machine: J75SSII-A; made by The Japan Steel Works, Ltd.
- Mold temperature: 90°C
- Cylinder temperature: 370°C-370°C-360°C-350°C
   (Examples 1 through 6, Comparative Example 1)
   350°C-350°C-340°C-330°C (Comparative Example 2)
   330°C-330°C-320°C-310°C (Comparative Example 3)
   300°C-300°C-290°C-280°C (Comparative Example 4)
- Injection speed: 2.3 m/sec
- Holding pressure: 46 MPa
- Pressure holding time: 7 sec
- Cooling time: 27 sec
- Screw rotational speed: 100 rpm
- Screw backpressure: 4 MPa

The liquid crystalline polyester used in Examples and Comparative Examples was prepared by the following procedure.

### (Liquid crystalline polyester - 1)

The following raw material monomers, metal catalyst, and acylation agent were fed to a polymerization reactor equipped with an agitator, a reflux column, a monomer feed opening, a nitrogen introduction opening, and evacuation/discharge lines.
- (I) 2-hydroxy-6-naphthoic acid (HNA) : 166 g (48% by mole)
- (II) terephthalic acid (TA): 76 g (25% by mole)
- (III) 4,4'-dihydroxybiphenyl (BP): 86 g (25% by mole)
- (IV) 4-hydroxybenzoic acid (HBA): 5 g (2% by mole)
- Potassium acetate catalyst (catalytic amount)
- Acetic anhydride (1.1 times by mole the total moles of HNA, BP, and HBA)

The reactants were agitated at 140°C for 1 hour in nitrogen gas stream. After that, the reactants were heated for 5.5 hours to raise the temperature to 360°C under agitation. Then, the atmosphere was reduced for 30 min down to 5 Torr (667 Pa), and the melt polymerization was carried out while distilling low boiling ingredients such as acetic acid. After the agitation torque reached a specified level, nitrogen was introduced to the reaction system to bring the atmosphere to a positive pressure. In this state, polymer was discharged from the lower portion of the polymerization reactor. The discharged polymer strand was then pelletized. The pellets were subjected to heat treatment at 300°C for 8 hours in nitrogen gas stream to obtain the liquid crystalline polyester - 1. The melting point of the liquid crystalline polyester - 1 was 352°C.

### (Liquid crystalline polyester - 2 (Comparative Article))

Vectra E950i manufactured by Polyplastics Co., Ltd. was adopted as the liquid crystalline polyester - 2.

### (Liquid crystalline polyester - 3 (Comparative Article))

There were charged 994 g of 4-hydroxybenzoic acid, 126 g of 4,4'-dihydroxybiphenyl, 960 g of acetic anhydride, 112 g of terephthalic acid, and 216 g of polyethylene terephthalate having 0.6 dl/g of intrinsic viscosity determined in a 0.1 g/dl pentafluorophenol at 60°C to the polymerization reactor used for manufacturing the liquid crystalline polyester - 1. Deacetic acid polycondensation for the mixture was carried out under the conditions given below. That is, the reaction was conducted in a nitrogen gas atmosphere at temperatures ranging from 100°C to 250°C for 6 hours, and then at temperatures ranging from 250°C to 315°C for 2 hours. After that, the reaction system was evacuated to 0.5 mmHg over a period of 2 hours at 315°C, and the reaction was conducted for further 1 hour, thereby distilling acetic acid by the amount almost equal to the theoretical quantity to complete the polycondensation. Thus a liquid crystalline polyester was obtained. The melting point of the liquid crystalline polyester - 3 was 314°C.

### (Liquid crystalline polyester - 4 (Comparative Article))

There were charged 994 g of 4-hydroxybenzoic acid, 223 g of 4,4'-dihydroxybiphenyl, 147 g of 2,6-diacetoxynaphthalene, 299 g of terephthalic acid, and 1077 g of acetic anhydride to the polymerization reactor used for manufacturing the liquid crystalline polyester - 1. Deacetic acid polycondensation for the mixture was carried out under the conditions given below. That is, the reaction was conducted in a nitrogen gas atmosphere at temperatures ranging from 100°C to 250°C for 5 hours, and then at temperatures ranging from 250°C to 330°C for 1.5 hours. After that, the reaction system was evacuated to 0. 5 mmHg over a period of 1. 5 hours at 330°C, and the reaction was conducted for further 1 hour, thereby distilling acetic acid by the amount almost equal to the theoretical quantity to complete the polycondensation. Thus a liquid crystalline polyester was obtained. The melting point of the liquid crystalline polyester - 4 was 296°C.

### Examples 1 through 6

To the liquid crystalline polyester - 1, there were blended mica (AB-25S, 25 µm of average particle size; manufactured by Yamaguchi Mica Co., Ltd.) and glass fiber - 1 (PF70E001, milled glass fiber having 10 µm in fiber diameter and 70 µm in weight average length; manufactured by Nitto Boseki Co., Ltd.) or glass fiber - 2 (CS03J416, chopped strand having 10 µm in fiber diameter and 3 mm in fiber length; manufactured by Asahi Fiber Glass Co.) in dry state at the respective mixing rates given in Table 1. The blend was then melted and kneaded in a twin screw extruder (TEX-30α; made by The Japan Steel Works, Ltd.) to obtain pellets. Specimens were molded from thus prepared pellets, and which were tested to determine the characteristics. The result is given in Table 1.

### Comparative Examples 1 through 6

Comparative Examples were prepared by: using talc (Crown Talc PP having 10 µm in average particle diameter; manufactured by Matsumura Sangyo Co., Ltd.) instead of mica (Comparative Example 1); using liquid crystalline polyesters 2 through 4 of the Comparative Articles as the liquid crystalline polyester (Comparative Examples 2 through 4) ; not adding fibrous filler (Comparative Example 5); and using excess fibrous filler (Comparative Example 6). They were evaluated similarly with Examples. The result is given in Table 1.

**Table 1**

| | | Example | | | | | | Comparative Example | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| Liquid crystalline polyester 1 | Parts by wt | 100 | 100 | 100 | 100 | 100 | 100 | 100 | | | | 100 | 100 |
| Liquid crystalline polyester 2 | Parts by wt | | | | | | | | 100 | | | | |
| Liquid crystalline polyester 3 | Parts by wt | | | | | | | | | 100 | | | |
| Liquid crystalline polyester 4 | Parts by wt | | | | | | | | | | 100 | | |
| Mica | Parts by wt | 30 | 45 | 20 | 20 | 20 | 40 | | 30 | 30 | 30 | 60 | 10 |
| Glass fiber 1 | Parts by wt | 15 | 10 | 15 | 20 | | | 10 | | 15 | 15 | | |
| Glass fiber 2 | Parts by wt | | | | | 15 | 15 | | 15 | | | | 45 |
| Talc | Parts by wt | | | | | | | 45 | | | | | |
| Glass fiber length | µm | 70 | 68 | 67 | 67 | 520 | 480 | 70 | 510 | 59 | 68 | - | 450 |
| Minimum injecting pressure | MPa | 90 | 123 | 101 | 116 | 1.30 | 150 | 170 | 175 | Not filled | Not filled | 145 | 220 |
| Flexural strength | MPa | 185 | 210 | 185 | 200 | 1.95 | 200 | 185 | 200 | 195 | 185 | 130 | 240 |
| BFT | °C | >300 | >300 | >300 | >300 | >300 | >300 | >300 | 240 | 210 | 210 | >300 | >300 |

## Claims

1. A liquid crystalline polyester resin composition comprising (A) 100 parts by weight of a liquid crystalline polyester resin comprising structural units represented by the respective formulae (I), (II), (III), and (IV), respectively, as essential structural components, in amounts of 40 to 75% by mole of the structural unit (I), 8.5 to 30% by mole of the structural unit (II), 8.5 to 30% by mole of the structural unit (III) and 0.1 to 8% by mole of the structural unit (IV) to all the structural units, (B) 5 to 80 parts by weight of mica and (C) 5 to 35 parts by weight of a fibrous filler: 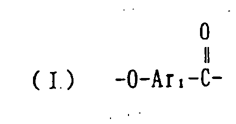 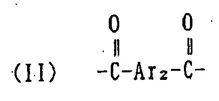
(III) -0-Ar₃-0- 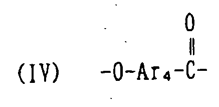
where Ar₁ is 2,6-naphthalene, Ar₂ is at least one group selected from the group consisting of 1,2-phenylene, 1,3-phenylene, and 1, 4-phenylene, Ar₃ is at least one group selected from the group consisting of 1,3-phenylene, 1,4-phenylene, and a residue of a compound having two or more phenylene groups bonding with each other at the respective para-positions, and Ar₄ is 1,4-phenylene.

2. The liquid crystalline polyester resin composition as in claim 1, wherein the (C) fibrous filler is glass fiber.

3. The liquid crystalline polyester resin composition as in claim 1 or claim 2, wherein the (C) fibrous filler has a weight average length of 300 µm or smaller.

4. A molded article comprising the liquid crystalline polyester resin composition according to claim 1 or 2.

5. A connector comprising the liquid crystalline polyester resin composition according to claim 1.

6. The connector as in claim 5, having a pitch of 1 mm or smaller and a stacking height of 3 mm or smaller after having being assembled on a substrate.

7. Use of the liquid crystalline polyester resin composition according to claim 1 for connector parts.

## Patentansprüche

1. Flüssigkristalline Polyesterharz-Zusammensetzung, umfassend (A) 100 Gew.-Teile eines flüssigkristallinen Polyesterharzes, das Struktureinheiten umfasst, die durch die jeweiligen Formeln (I), (II), (III) bzw. (IV) veranschaulicht sind, als wesentliche Strukturkomponenten in Mengen von 40 bis 75 mol-% der Struktureinheit (I), 8,5 bis 30 mol-% der Struktureinheit (II), 8,5 bis 30 mol-% der Struktureinheit (III) und 0,1 bis 8 mol-% der Struktureinheit (IV), bezogen auf alle Struktureinheiten, (B) 5 bis 80 Gew.-Teile Glimmer und (C) 5 bis 35 Gew.-Teile eines faserförmigen Füllstoffs: 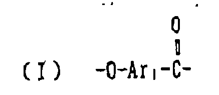 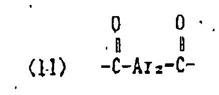
(III) -0-Ar₃-0- 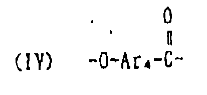
wobei Ar₁ 2,6-Naphthalin ist, Ar₂ wenigstens eine Gruppe ist, die aus der aus 1,2-Phenylen, 1,3-Phenylen und 1,4-Phenylen bestehenden Gruppe ausgewählt ist, Ar₃ wenigstens eine Gruppe ist, die aus der aus 1,3-Phenylen, 1,4-Phenylen und einem Rest einer Verbindung mit zwei oder mehr Phenylengruppen, die an den jeweiligen para-Positionen miteinander verbunden sind, bestehenden Gruppe ausgewählt ist und Ar₄ 1,4-Phenylen ist.

2. Flüssigkristalline Polyesterharz-Zusammensetzung nach Anspruch 1, wobei der faserförmige Füllstoff (C) Glasfaser ist.

3. Flüssigkristalline Polyesterharz-Zusammensetzung nach Anspruch 1 oder Anspruch 2, wobei der faserförmige Füllstoff (C) ein Massenmittel der Länge von 300 µm oder kleiner hat.

4. Formteil, umfassend die flüssigkristalline Polyesterharz-Zusammensetzung nach Anspruch 1 oder 2.

5. Verbinder, umfassend die flüssigkristalline Polyesterharz-Zusammensetzung nach Anspruch 1,

6. Verbinder nach Anspruch 5 mit einer Teilung von 1 mm oder kleiner und einer Stapelhöhe von 3 mm oder kleiner nach der Montage auf einem Substrat.

7. Verwendung der flüssigkristallinen Polyesterharz-Zusammensetzung nach Anspruch 1 für Verbinderteile.

## Revendications

1. Composition de résine polyester cristalline liquide comportant (A) 100 parties en poids d'une résine polyester cristalline liquide comportant des unités structurelles représentées par les formules respectives (I), (II), (III) et (IV), respectivement, en tant que composants structurels essentiels, selon des quantités de 40 à 75 % en mole de l'unité structurelle (I), 8,5 à 30 % en mole de l'unité structurelle (II), 8,5 à 30 % en mole de l'unité structurelle (III) et 0,1 à 8 % en mole de l'unité structurelle (IV) en ce qui concerne la totalité des unités structurelles, (B) 5 à 80 parties en poids de mica et (C) 5 à 35 parties en poids d'une charge fibreuse : 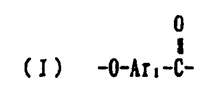 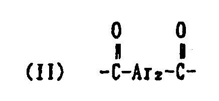
(III) -0-Ar₃-0- 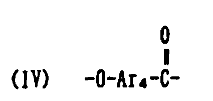
où Ar₁ est 2,6-naphtalène, Ar₂ est au moins un groupe choisi parmi le groupe constitué de 1,2-phénylène, 1,3-phénylène, et 1,4-phénylène, Ar₃ est au moins un groupe choisi parmi le groupe constitué de 1,3-phénylène, 1,4-phénylène, et un résidu d'un composé ayant deux ou plus de deux groupes phénylène se liant les uns aux autres au niveau des positions para respectives, et Ar₄ est 1,4-phénylène.

2. Composition de résine polyester cristalline liquide selon la revendication 1, dans laquelle la charge fibreuse (C) est une fibre de verre.

3. Composition de résine polyester cristalline liquide selon la revendication 1 ou la revendication 2, dans laquelle la charge fibreuse (C) a une longueur moyenne en poids de 300 µm ou moins.

4. Article moulé comportant la composition de résine polyester cristalline liquide selon la revendication 1 ou 2.

5. Connecteur comportant la composition de résine polyester cristalline liquide selon la revendication 1.

6. Connecteur selon la revendication 5, ayant un pas de 1 mm ou moins et une hauteur d'empilage de 3 mm ou moins après avoir été assemblé sur un substrat.

7. Utilisation d'une composition de résine polyester cristalline liquide selon la revendication 1 pour des parties de connecteur.
